# EUROPEAN PATENT APPLICATION

(11) **EP 4 383 423 A1**
(43) Date of publication of application: **12.06.2024**
(21) Application number: 23769429.4
(22) Date of filing: 10.01.2023
(51) Int. Cl.: H01M 50/24

(54) **CASE, BATTERY AND POWER CONSUMING DEVICE**

(30) Priority: 15.03.2022 CN 202220560305 U
(71) Applicant: Contemporary Amperex Technology Co., Limited, Ningde City, Fujian 352100 (CN)
(72) Inventor: LUO, Wenchao, Ningde City, Fujian 352100 (CN)
(74) Representative: Rowlands, Stuart Michael
(86) International application number: PCT/CN2023/071536
(87) International publication number: WO 2023/173918

(57) **Abstract**

Provided in the embodiments of the present application are a case, a battery and a power consuming device. The case comprises a first case, a second case, a seal and a fitting member. The first case is provided with a first opening, the second case is configured to cover the first opening, the seal is at least partially clamped between the first case and the second case so as to seal the first opening, the fitting member is accommodated in the first case and is connected to same, and at least part of the seal is clamped by the fitting member and the second case. By means of the arrangement of the fitting member, the structure of a joint between the first case and the second case can be fully utilized, so that the connection between the first case and the second case is at least partially moved into the first case, thereby ensuring the connecting area between the first case and the second case, and reducing the volume proportion of the joint outside the case, and thus improving an external structure of a sealed case.

## Description

### CROSS-REFERENCE TO RELATED APPLICATIONS

This application claims priority to Chinese Patent Application No. 202220560305.8, filed on March 15, 2022, and entitled "BOX, BATTERY, AND ELECTRICAL DEVICE", which is incorporated herein by reference in its entirety.

### TECHNICAL FIELD

This application relates to the technical field of box equipment, and in particular, to a box, a battery, and an electrical device.

### BACKGROUND

With the increasing aggravation of natural resource depletion and environmental damage, systems capable of storing energy and efficiently utilizing the stored energy are drawing higher interest of participants in various fields. Battery cells are a new system of renewable energy, and are commonly used as devices for storing energy.

In the technical field of a battery device that uses a battery cell, in order to ensure the safety of the battery in use, a junction between an upper part and a lower part of a housing of the battery cell is usually sealed by using a sealing structure, so as to improve the hermeticity of the housing of the battery cell and ensure safety. However, the existing sealing structure takes up a relatively large volume proportion, imposes an adverse effect on the dimension, and is unfavorable for practical applications. Therefore, how to optimize the sealing structure of the housing is an urgent technical problem in the battery device technology.

### SUMMARY

Some embodiments of this application provide a box, a battery, and an electrical device to improve the existing box structure, ensure high hermeticity, and alleviate the problem that the sealing structure leads to an increased outside dimension of the box.

According to a first aspect of some embodiments of this application, a box is provided, including a first box body, a second box body, a sealing element, and a mating piece. A first opening is created on the first box body. The second box body is configured to fit and cover the first opening. The sealing element is at least partially clamped between the first box body and the second box body and configured to seal the first opening. The mating piece is accommodated in the first box body and connected to the first box body. The mating piece and the second box body clamp at least a part of the sealing element.

With the above structure, by disposing the mating piece, this application can take full advantage of the structure of a junction between the first box body and the second box body, so that the junction between the first box body and the second box body is at least partially moved into the first box body. In this way, a sufficient connection area between the first box body and the second box body is ensured. At the same time, the volume proportion of the junction outside the box is reduced, and the external structure of the sealed box is improved.

In some optional embodiments of this application, a first flange extending toward a circumference of the first box body is disposed on the first box body. A second flange extending toward a circumference of the second box body is disposed on the second box body. The second flange is connected to the first flange correspondingly.

With the above structure, through the first flange and the second flange, it is convenient for the first box body and the second box body to fit each other. Through the two corresponding flange structures, a sufficient contact area is available at the junction between the first box body and the second box body, facilitates arrangement of a connection structure and a sealing element, and implements a firm and hermetic fit between the first box body and the second box body.

In some optional embodiments of this application, a clearance between the mating piece and an inner wall of the first box body is filled with a sealant layer.

With the above structure, by disposing the sealant layer, the gap between the mating piece and the first box body is significantly reduced, and the adverse effect caused by the mating piece to the hermeticity is reduced.

In some optional embodiments of this application, the mating piece includes a catch portion and a connecting portion. A top of the connecting portion is connected to the catch portion. The catch portion and the second flange clamp at least a part of the sealing element. The connecting portion is connected to the inner wall of the first box body.

With the above structure, by disposing the catch portion and the connecting portion, this application improves the division of work of different parts on the mating piece, and facilitates connection between the mating piece and the first box body.

In some optional embodiments of this application, the first flange, the sealant layer, and the connecting portion jointly clamp at least a part of the sealing element.

With the above structure, the sealant layer is not only able to fill the gap between the first box body and the mating piece, but also able to make an upper surface of the first flange, an upper surface of the sealant layer, and an upper surface of the connecting portion form the same plane after the sealant layer fills the gap, thereby facilitating laying of the sealing element, and improving the hermeticity of the box.

In some optional embodiments of this application, the catch portion extends toward inside of the first box body.

With the above structure, by extending the catch portion toward the inside of the first box body, this application moves the junction between the first box body and the second box body into the first box body, thereby reducing the volume proportion of the junction outside the box and improving the external structure of the sealed box.

In some optional embodiments of this application, a bend portion is further disposed between the catch portion and the connecting portion. The bend portion protrudes towards the inside of the first box body. The catch portion is connected to a top of the bend portion and extends toward the first flange.

With the above structure, by disposing the bend portion, the mechanical strength of the mating piece is improved, and the load-bearing capacity of the mating piece is increased.

In some optional embodiments of this application, the first box body is rectangular, and there are a pair of mating pieces disposed symmetrically on two sides of the first box body.

With the above structure, by disposing the mating pieces on two symmetrical sides of the box, the width of the resultant box in one direction is reduced significantly, thereby facilitating the fit between the battery and the mounting position.

In some optional embodiments of this application, the first flange is connected to the second flange by a bolt.

With the above structure, the bolt structure facilitates alignment when the first box body fits the second box body.

According to a second aspect of this application, a battery is provided, including the box. The box is configured to accommodate battery components.

According to a third aspect of this application, an electrical device is provided, including the battery configured to provide electrical energy.

In the box and battery according to some embodiments of this application, by disposing the mating piece, this application can take full advantage of the structure of a junction between the first box body and the second box body, so that the junction between the first box body and the second box body is at least partially moved into the first box body. In this way, a sufficient connection area between the first box body and the second box body is ensured. At the same time, the volume proportion of the junction outside the box is reduced, and the external structure of the sealed box is improved.

### BRIEF DESCRIPTION OF DRAWINGS

The following describes features, advantages, and technical effects of exemplary embodiments of this application with reference to accompanying drawings.
FIG. 1 is a structural schematic diagram of a vehicle according to some embodiments of this application.
FIG. 2 is a structural schematic exploded view of a box according to an embodiment of this application;
FIG. 3 is a cross-sectional structural schematic diagram of a portion at a first flange and a second flange according to an embodiment of this application;
FIG. 4 is a three-dimensional diagram of the embodiment shown in FIG. 2;
FIG. 5 is a schematic top view of a structure of a first box body according to an embodiment of this application;
FIG. 6 is a cross-sectional structural schematic diagram of a portion at a first flange and a second flange according to another embodiment of this application; and
FIG. 7 is a top view schematic of a structure of a first box body according to the embodiment shown in FIG. 1.

### List of reference numerals:

1 first box body; 11 first opening; 12 first flange; 121 first connecting face; 2 second box body; 21 second flange; 211 second connecting face; 3 sealing element; 4 mating piece; 41 connecting portion; 42 catch portion; 421 catch face; 43 bend portion; 5 sealant layer; 51 sealant face; 100 battery; 200 controller; 300 motor; 1000 vehicle.

The drawings are not necessarily drawn to scale.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

Reference to "embodiment" in this application means that a specific feature, structure, or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

Currently, in view of a promising market development prospect and a favorable application trend, batteries are increasingly used as an energy device by virtue of a simple structure and recyclability of the batteries. The characteristics of a battery impose a relatively high requirement on hermeticity. Using an electric vehicle as an example, in a structure of an existing electric vehicle, a power battery is usually arranged under a floor panel of the vehicle. During operation, the battery is drastically susceptible to the outside under the floor panel. In a case of heavy rainfall, the battery may be immersed in water, thereby being prone to cause damage to the electrical components inside the battery or even result in safety hazards. Therefore, in order to reduce the interference of external factors on the battery, a higher requirement is imposed on hermeticity of the battery in the battery field.

The inventor hereof has noted that, in a conventional battery, in order to improve the hermeticity of the battery, a connection edge is usually widened. In this way, when different parts of the box of the battery fit together, a sealing gasket is added to a snap-fit position to ensure high hermeticity of the junction. For example, the box of the battery includes a first box body and a second box body. At the junction between the first box body and the second box body, a flange structure protruding beyond the outside of the box is disposed. Between the flange structures on both sides, a sealing gasket is disposed to implement sealing. When being press-fitted together, the flange structures on both sides abut on the sandwiched sealing gasket, thereby effectively improving the hermeticity of the junction. However, in practical applications, for the purpose of mounting a fastening component such as a bolt, the connection edge is of a specified dimension in width. After the connection edge is further widened, the connection edge protrudes much beyond the outside of the box, thereby directly increasing the outside dimension of the battery, and severely inconveniencing the mounting of the battery in the electrical device.

In order to alleviate the defects of the sealing structure used in the box of the existing battery, the applicant has found through research that, the box is formed by fitting a plurality of parts together, and electrical components inside the battery are usually disposed by avoiding seams at which different parts of the box are fitted together, so as to prevent aggravation of the impact of the external environment on the inside of the battery. In other words, a redundant space inside the box is reserved at the seams at which different parts of the box are fitted together. By disposing the sealing structure at the seams, the redundant space in the box is fully utilized, and the protrusion beyond the outside of the box is reduced significantly, and the external dimensions of the battery are reduced. This method is universally applicable.

Based on the above considerations, in order to solve the sealing structure problem of the existing batteries, the inventor hereof has designed a box and a battery through in-depth research.

The battery referred to herein means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

An embodiment of this application provides an electrical device powered by a battery. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle 1000 is used as an example of the electrical device according to an embodiment of this application.

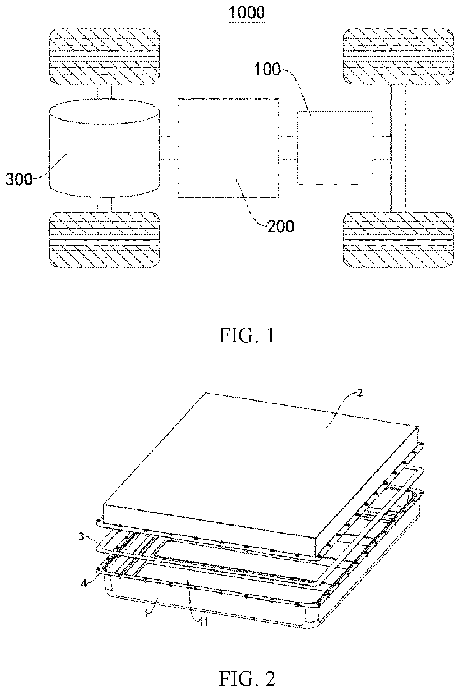

As shown in FIG. 1, FIG. 1 is a structural schematic diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

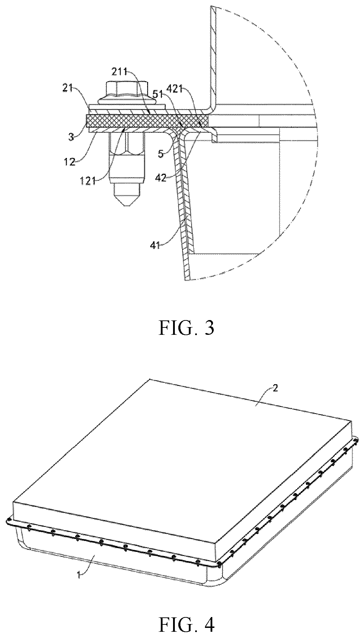

In some embodiments of this application, optionally, as shown in FIG. 2 and FIG. 3, FIG. 2 is an exploded structural schematic view of a box according to an embodiment of this application; and FIG. 3 is a cross-sectional structural schematic diagram of a portion at a first flange 12 and a second flange 21 according to an embodiment of this application. An embodiment of this application provides a box. The box includes a first box body 1, a second box body 2, a sealing element 3, and a mating piece 4. A first opening 11 is created on the first box body 1. The second box body 2 is configured to fit and cover the first opening 11. The sealing element 3 is at least partially clamped between the first box body 1 and the second box body 2 and configured to seal the first opening 11. The mating piece 4 is accommodated in the first box body 1 and connected to the first box body 1. The mating piece 4 and the second box body 2 clamp at least a part of the sealing element 3.

Without limitation, the first box body 1 may be in a shape of a cylinder, a rectangle, or a polygonal prism. An opening is created at one end of the first box body. In an embodiment of this application, the first box body 1 may be rectangular in shape. Without limitation, the second box body 2 may be a cap plate overlaying the first opening 11. Without limitation, the second box body 2 may be in a shape of a cylinder, a rectangle, or a polygonal prism. An opening is created at one end of the second box body, and the opening closely fits the first opening 11. As an example, referring to FIG. 4, FIG. 4 is a three-dimensional diagram of the embodiment shown in FIG. 2. The second box body 2 may be rectangular in shape, and an opening is created at the bottom of the second box body.

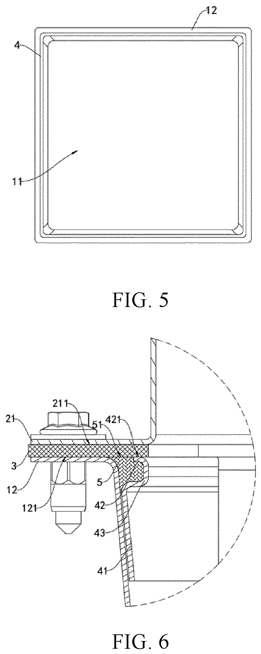

Without limitation, the mating piece 4 may be a plate-like structure disposed at the first opening 11. The plate-like structure is parallel to the plane of the first opening 11, and extends toward the inside of the first box body 1. As an example, referring to FIG. 5, FIG. 5 is a schematic top view of a structure of a first box body 1 according to an embodiment of this application. The mating piece 4 is disposed around the first opening 11 for one circle. Specifically, the sealing element 3 may be a rubber gasket.

By disposing the mating piece 4, this application can take full advantage of the structure of the junction between the first box body 1 and the second box body 2, so that the junction between the first box body 1 and the second box body 2 is at least partially moved into the first box body 1. In this way, a sufficient connection area between the first box body 1 and the second box body 2 is ensured, and at the same time, the volume proportion of the junction outside the box is reduced, and the external structure of the sealed box is improved.

In some embodiments of this application, optionally, as shown in FIG. 2 and FIG. 3, a first flange 12 extending away from the first box body 1 along a circumference of the first box body 1 is disposed on the first box body 1. A second flange 21 extending toward a circumference of the second box body 2 is disposed on the second box body 2. The second flange 21 is connected to the first flange 12 and the mating piece 4 correspondingly.

Without limitation, the first flange 12 is formed by extending from the first opening 11 toward the circumference of the box. Without limitation, the top of the first flange 12 provides a first connecting face 121, and the bottom of the second flange 21 provides a second connecting face 211. The first connecting face 121 can closely fit the second connecting face 211. Specifically, a projection of the first flange 12 and a projection of the second flange 21 in a plane perpendicular to the thickness direction of the box at least partially coincide. Specifically, the sealing element 3 is at least partially disposed between the first connecting face 121 and the second connecting face 211.

Through the first flange 12 and the second flange 21, it is convenient for the first box body 1 and the second box body 2 to fit each other. Through the two corresponding flange structures, a sufficient contact area is available at the junction between the first box body 1 and the second box body 2, facilitates arrangement of a connection structure and a sealing element 3, and implements a firm and hermetic fit between the first box body 1 and the second box body 2.

In some embodiments of this application, optionally, as shown in FIG. 2 and FIG. 3, a clearance between the mating piece 4 and an inner wall of the first box body 1 is filled with a sealant layer 5.

As an example, referring to FIG. 2, in order to reduce internal angular corner structures of the box of the battery, a rounded corner structure is employed at the corner part. A conspicuous V-shaped gap is prone to be formed between the mating piece 4 and the inner wall of the first box body 1. The sealant layer 5 is configured to fill the gap.

By disposing the sealant layer 5, the gap between the mating piece 4 and the first box body 1 is significantly reduced, and the adverse effect caused by the mating piece 4 to the hermeticity is reduced.

In some embodiments of this application, optionally, as shown in FIG. 3, the mating piece 4 includes a catch portion 42 and a connecting portion 41. A top of the connecting portion 41 is connected to the catch portion 42. The catch portion 42 and the second flange 21 clamp at least a part of the sealing element 3. The connecting portion 41 is connected to the inner wall of the first box body 1.

Without limitation, one end of the connecting portion 41 is connected to the catch portion 42, and the other end of the connecting portion extends along the inner wall of the first box body 1 at a close-fitting position, thereby significantly improving the hermeticity between the connecting portion 41 and the first box body 1. In an embodiment of this application, the catch portion 42 and the connecting portion 41 are formed in one piece. In another embodiment of this application, the connecting portion 41 may be connected to the first box body 1 by welding or gluing, or by other means. The connection manner is not limited herein.

By disposing the catch portion 42 and the connecting portion 41, this application improves the division of work of different parts on the mating piece 4, and facilitates connection between the mating piece 4 and the first box body 1.

In some embodiments of this application, optionally, as shown in FIG. 3, the first flange 12, the sealant layer 5, and the connecting portion 41 jointly clamp at least a part of the sealing element 3.

Without limitation, the top of the catch portion 42 is a catch face 421. The top of the sealant layer 5 is a sealant face 51. The first connecting face 121, the sealant face 51, and the catch face 421 together form the same plane. The sealing element 3 is sandwiched between the second connecting face 211 and the first connecting face 121, and between the sealant face 51 and the catch face 421. As an example, the sum of widths of the first connecting face 121, the sealant face 51, and the catch face 421 is equal to the width of the second connecting face 211.

The sealant layer 5 is not only able to fill the gap between the first box body 1 and the mating piece 4, but also able to make an upper surface of the first flange 12, an upper surface of the sealant layer 5, and an upper surface of the connecting portion 41 form the same plane after the sealant layer 5 fills the gap, thereby making it convenient for the sealing element 3 to improve the hermeticity of the box.

In some embodiments of this application, optionally, as shown in FIG. 3, the catch portion 42 extends toward inside of the first box body 1.

Without limitation, the catch portion 42 and the connecting portion 41 may be molded by stamping or bending a flat and straight sheet.

By extending the catch portion 42 toward the inside of the first box body 1, this application moves the junction between the first box body 1 and the second box body 2 into the first box body 1, thereby reducing the volume proportion of the junction outside the box and improving the external structure of the sealed box.

In some embodiments of this application, optionally, as shown in FIG. 6, FIG. 6 is a cross-sectional schematic structural diagram of a portion at a first flange 12 and a second flange 21 according to another embodiment of this application. A bend portion 43 is further disposed between the catch portion 42 and the connecting portion 41. The bend portion 43 protrudes toward inside of the first box body 1. The catch portion 42 is connected to a top of the bend portion 43 and extends toward the first flange 12.

Without limitation, the bend portion 43, the catch portion 42, and the connecting portion 41 are formed in one piece. There is a clearance between the catch portion 42 and the first flange 12. Through the clearance, the sealant layer 5 can fill a chamber between the bend portion 43 and the first box body 1. Specifically, after the sealant layer 5 fills the clearance between the catch portion 42 and the first flange 12, the top of the catch portion 42, the top of the first flange 12, and the top of the sealant layer 5 are in the same plane.

By disposing the bend portion 43, the mechanical strength of the mating piece 4 is improved, and the load-bearing capacity of the mating piece 4 is increased.

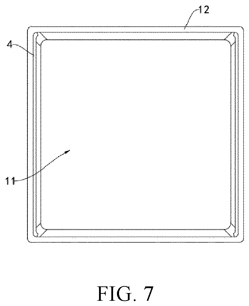

In some embodiments of this application, optionally, as shown in FIG. 7, FIG. 7 is a top view schematic of a structure of a first box body 1 according to the embodiment shown in FIG. 1. The first box body 1 is rectangular. There are a pair of mating pieces 4 disposed symmetrically on two sides of the first box body 1.

Without limitation, the location of the mating piece 4 may be flexibly adjusted depending on the dimensional requirements of the mounting position of the battery.

By disposing the mating pieces 4 on two symmetrical sides of the box, the width of the resultant box in one direction is reduced significantly, thereby facilitating the fit between the battery and the mounting position.

In some embodiments of this application, optionally, as shown in FIG. 2, the first flange 12 is connected to the second flange 21 by a bolt.

Without limitation, a plurality of through-holes are created on the first flange 12 and the second flange 21, and configured to allow passage and fastening of the bolt. Specifically, a through-hole is also created at the corresponding position on the sealing element 3, and configured to allow passage of the bolt.

The bolt structure facilitates alignment when the first box body 1 fits the second box body 2.

An embodiment of this application further provides a battery including the box. The box is configured to accommodate components in the battery.

In the box and battery according to some embodiments of this application, by disposing the mating piece 4, this application can take full advantage of the structure of a junction between the first box body 1 and the second box body 2, so that the junction between the first box body 1 and the second box body 2 is at least partially moved into the first box body 1. In this way, a sufficient connection area between the first box body 1 and the second box body 2 is ensured. At the same time, the volume proportion of the junction outside the box is reduced, and the external structure of the sealed box is improved.

Although this application has been described with reference to exemplary embodiments, various improvements may be made to the embodiments without departing from the scope of this application, and the components of this application may be replaced with equivalents. Particularly, to the extent that no structural conflict exists, various technical features mentioned in various embodiments may be combined in any manner. This application is not limited to the specific embodiments disclosed herein, but includes all technical solutions falling within the scope of the claims.

## Claims

1. A box of a battery, comprising:
a first box body, on which a first opening is created;
a second box body, configured to fit and cover the first opening;
a sealing element, at least partially clamped between the first box body and the second box body and configured to seal the first opening; and
a mating piece, accommodated in the first box body and connected to the first box body, wherein the mating piece and the second box body clamp at least a part of the sealing element.

2. The box according to claim 1, wherein a first flange extending toward a circumference of the first box body is disposed on the first box body, a second flange extending toward a circumference of the second box body is disposed on the second box body, and the second flange is connected to the first flange correspondingly.

3. The box according to claim 2, wherein a clearance between the mating piece and an inner wall of the first box body is filled with a sealant layer.

4. The box according to claim 3, wherein the mating piece comprises a catch portion and a connecting portion, a top of the connecting portion is connected to the catch portion, the catch portion and the second flange clamp at least a part of the sealing element, and the connecting portion is connected to the inner wall of the first box body.

5. The box according to claim 4, wherein the first flange, the sealant layer, and the connecting portion jointly clamp at least a part of the sealing element.

6. The box according to claim 4 or 5, wherein the catch portion extends toward inside of the first box body.

7. The box according to any one of claims 4 to 6, wherein a bend portion is further disposed between the catch portion and the connecting portion, the bend portion protrudes toward inside of the first box body, and the catch portion is connected to a top of the bend portion and extends toward the first flange.

8. The box according to any one of claims 4 to 7, wherein the first box body is rectangular, and there are a pair of mating pieces disposed symmetrically on two sides of the first box body.

9. The box according to any one of claims 2 to 8, wherein the first flange is connected to the second flange by a bolt.

10. A battery, comprising the box according to any one of claims 1 to 9.

11. An electrical apparatus, comprising the battery according to claim 10, wherein the battery is configured to provide electrical energy.
